# EUROPEAN PATENT APPLICATION

(11) **EP 1 857 268 A1**
(43) Date of publication of application: **21.11.2007**
(21) Application number: 06715313.0
(22) Date of filing: 06.03.2006
(51) Int. Cl.: B32B 27/00, B29C 45/14, C09J 7/02, B29L 7/00

(54) **TRANSFER FILM, DECORATION FILM AND METHOD FOR PRODUCING THE SAME, AND DECORATION**

(30) Priority: 08.03.2005 JP 2005064199
(71) Applicant: NISSHA PRINTING CO., LTD., Nakagyo-ku Kyoto-shi Kyoto 604-8551 (JP)
(72) Inventor: MUKO, Hiromitsu c/o NISSHA PRINTING CO., LTD.,, Kyoto 604-8551 (JP)
(74) Representative: Müller-Boré & Partner Patentanwälte
(86) International application number: PCT/JP2006/304293
(87) International publication number: WO 2006/095695

(57) **Abstract**

A method for manufacturing a decorating product by which a decorating product additionally printed with a design and the like can be easily obtained, and provides the decorating product.

With respect to a transfer film 1 in which a design layer 5 for transfer is formed through a peeling layer 4 on a base material sheet 2, and further the design layer 5 is coated with an adhesive layer 6, a second design layer 8 is additionally printed on the surface of the adhesive layer 6 by ink jet printer, and the transfer film 1, to which the second design layer 8 is additionally printed, is brought into contact with a surface subject to printing under heat and pressure, whereby both the design and the second design thus additionally printed are transferred to the surface subject to printing.

## Description

### TECHNICAL FIELD

The present invention relates to a transfer film, a decorative film to print a design on a surface subject to printing, a method for manufacturing a decorating product, and the decorating product obtained by the manufacturing method.

### BACKGROUND ART

Conventionally, a post transferring method and an inmold printing method have been known as a method for printing a design on a molded surface. The post transferring method includes an up-down transferring method, a roll transferring method and an AP transferring method, and explaining the up-down transferring method as an example, the method is performed such that a transfer film is intermittently delivered from a wind-up roll, and transferring is performed by a transferring device provided on a transfer-film traveling path. The transferring device has a table on which a material to be printed is placed and a movable cavity heated by a heater arranged oppositely to the table, and the device holds a transfer film between the table and the movable cavity and urges a design layer formed on the transfer film against the material to be printed, thereby performing the transferring of the design. A base film having lost the design layer due to transfer is wound up by the wind-up roll (for example, refer to Fig.1, page5 of JP-A 07-290686).

On the other hand, the inmold printing method is performed such that a transfer film on which a design layer is previously printed is held in a mold when being injection molded, whereby a design is transferred to a molded surface simultaneously with the injection molding. The transfer film held in the mold is supplied intermittently from a film roll, and a base film having lost the design layer is wound up by the wind-up roll (for example, refer to Fig.10, page309, of JP-A 61-297149).

With such a transferring method, printing can be performed without using a solvent, so that a design can be easily printed without polluting environment. Further, if an aluminum deposit foil is used as a design layer, the feel of material of metal plating shades could be simply formed on the resin surface.

In particular, the transferring method by the inmold printing has an advantage in that a design can be also printed on the molded surface having a complex uneven surface such as three-dimensional curved surface, thereby accommodating for mass production.

Although the above-mentioned transfer technology has been employed for wide applications, as the applications are spread, new needs are occurring. For example, when manufacturing an enclosure of mobile phones, under the circumstances in which an enclosure on whose display panel only the logo of a manufacturer is printed, and an enclosure on whose display panel the logo of a communication service company in addition to the logo of a manufacturer are printed must be separately manufactured, there is needs in that part of a design to be transferred is preferably changed according to a lot.

However, a design layer printed on a transfer film is sealed between a peeling layer to enhance the release characteristics of a base film and an adhesive layer to allow a design to adhere to a molded surface, so that there has been an inconvenience in that a conventional transferring method cannot accommodate for needs of preferably and additionally printing part of the design. Further, newly producing a printing plate for additional printing causes the problem to be solved, but the cost is increased, which is not practical.

### DISCLOSURE OF THE INVENTION

The present invention is made in view of such a problem in the conventional transferring method, and it is an object of the invention to provide a method for manufacturing a transfer film and a decorative film to obtain easily a decorating product on which a design have been additionally printed, and for manufacturing the decorating product using these films, and provide the decorating product.

The present invention provides a transfer film in which a design layer for transfer is formed through a peeling layer on a base material sheet and, further, is coated with an adhesive layer, characterized in that with respect to the transfer film, a second design layer is additionally printed on the surface of the adhesive layer by digital printing device.

The present invention provides a decorative film in which a design layer is formed on a base material sheet and, further, is coated with an adhesive layer, characterized in that with respect to the decorative film, a second design layer is additionally printed on the surface of the adhesive layer by digital printing device.

The present invention provides a method for manufacturing a decorating product, characterized in that with respect to a transfer film in which a design layer for transfer is formed through a peeling layer on a base material sheet and, further, is coated with an adhesive layer, a second design layer is additionally printed on the surface of the adhesive layer, and the transfer film, on which the second design layer is additionally printed, is brought into contact with a surface subject to printing under heat and pressure, whereby both the design and the second design thus additionally printed are transferred to the surface subject to printing.

The present invention provides a method for manufacturing a decorating product, characterized in that with respect to a decorative film in which a design layer is formed on a base material sheet and, further, is coated with an adhesive layer, a second design layer is additionally printed on the surface of the adhesive layer, and the decorative film, on which the second design layer is additionally printed, is brought into contact with a surface subject to printing under heat and pressure, whereby the decorative film having both the design and the second design thus additionally printed is integrated with the surface subject to printing.

The present invention provides a method for manufacturing a decorating product, characterized in that with respect to a transfer film in which a design layer for transfer is formed through a peeling layer on a base material sheet and, further, is coated with an adhesive layer, a second design layer is additionally printed on the surface of the adhesive layer as required, and one of the transfer film having only the design layer and the transfer film, on which the second design layer is additionally printed, is brought into contact with a surface subject to printing under heat and pressure, whereby a decorating product to which only the design is transferred, or a decorating product to which both the design and the second design are transferred is selectively manufactured.

The present invention provides a method for manufacturing a decorating product, characterized in that with respect to a decorative film in which a design layer is formed on a base material sheet and, further, is coated with an adhesive layer, a second design layer is additionally printed on the surface of the adhesive layer as required, and one of the decorative film having only the design layer and the decorative film, on which the second design layer is additionally printed, is brought into contact with a surface subject to printing under heat and pressure, whereby the decorating product with which the decorative film having only the design is integrated, or the decorating product with which the decorative film having both the design and the second design is integrated is selectively manufactured.

In the method for manufacturing a decorating product, a transfer film or a decorative film, on which the second design layer can be additionally printed, is arranged between a fixed mold and a movable mold, a clamp operation is performed, and then a molten resin is injected from the second design layer side into the cavity, whereby the second design layer is sealed between the resin molded in a mold and the adhesive layer.

In the method for manufacturing a decorating product, the second design layer can be additionally printed on the surface of the adhesive layer by using digital printing device.

Ink jet printer can be used as the digital printing device.

The present invention provides a decorating product in which a design is printed on a surface subject to printing by using a transfer film or a decorative film whose design layer is coated with an adhesive layer, characterized in that a second design layer printed by using digital printing device is formed between the surface subject to printing of the decorating product and the adhesive layer adhering to the surface subject to printing.

According to a method for manufacturing a transfer film, a decorative film and a decorating product of the present invention, there is a merit in that even when a design is partially added, the design can be easily and additionally printed without newly producing a printing plate to produce the transfer film or the decorative film again from the beginning.

Further, according to a method for manufacturing a decorating product in connection with the present invention wherein a second design layer is additionally printed on the surface of an adhesive layer, a decorating product to which only the design has been transferred, or a decorating product to which both the design and the second design have been transferred can be selectively manufactured.

According to a decorating product of the present invention, the second design additionally printed is sealed between the adhesive layer and the molded surface subject to printing, thereby allowing the stability of the second design to be enhanced.

### BRIEF DESCRIPTION OF THE DRAWINGS

Fig. 1 is a sectional view showing a configuration of a transfer film used for the transferring method of the present invention.
Figs. 2(a) to 2(c) are explanatory views each showing a process for inmold printing using the transfer film in Fig. 1.
Fig. 3 is an explanatory view showing a design printed on the transfer film.
Fig. 4 is a plan view showing a molded product manufactured by the inmold printing.
Fig. 5 is a sectional view showing a configuration of a transfer film additionally printed with a design.
Fig. 6 is a configuration view of ink jet printer for additional printing.
Fig. 7 is a view equivalent to Fig. 4 showing a molded product additionally printed.

### BEST MODE FOR CARRYING OUT THE INVENTION

Hereinafter, the present invention will be explained in detail based on embodiments shown in the drawings.

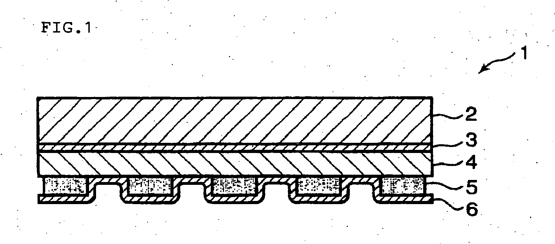

Fig. 1 shows a configuration of a transfer film used for a method for manufacturing a decorating product in connection with the present invention.

In this figure, a transfer film 1 consists of a base film (base material sheet) 2, a releasing layer 3, a peeling layer 4, a design layer 5 and an adhesive layer 6. Further, in the following description, the peeling layer 4, the design layer 5 and the adhesive layer 6 may be collectively referred to as a decorating layer.

The material of the base film 2 can preferably use PET (Polyethylene Terephthalate) of a high heat resistance, but not limited thereto, either a single-layer resin selected from, or a laminated resin of two or more kinds of resins or a copolymer resin selected from polycarbonate resin, polyamide resin, polyimide resin, polyester resin, acrylic resin, olefin resin, urethane resin, acrylonitrile-butadiene-styrene resin, vinyl chloride resin and the like can be used.

The thickness of the base film 2 is preferably 5 to 500 µm, preferably 25 to 75 µm considering a good handling ability, and preferably 38 to 50 µm considering a good molding stability.

The peeling layer 4 exhibits a surface located at the outermost part when the base film 2 is peeled after a design is transferred, so that the peeling layer serves as a protective layer of the design.

The material of the peeling layer 4 includes acryl-type resin, nitrocellulose-type resin, polyurethane-type resin, chlorinated rubber-type resin, polyvinyl chloride-acetatecopolymer-type resin, polyamide-type resin, polyester-type resin, epoxy-type resin, polycarbonate-type resin, olefin-type resin, acrylonitrile-butadiene-styrene resin, and the like. Further, the film thickness of the peeling layer 4 is preferably 0.5 to 50 µm.

The releasing layer 3 is coated on the surface of the base film 2 to make smooth to peel the peeling layer 4 from the base film 2. Therefore, if the peeling can be easily performed between the base film 2 and the peeling layer 4, the releasing layer 3 may be omitted. The material of the releasing layer 3 is composed of the same material as that of the above-mentioned peeling layer 4.

The design layer 5 including characters, symbols, patterns, coating patterns and the like is sealed between the peeling layer 4 and the adhesive layer 6, and the material of the design layer 5 can include acryl-type resin, nitrocellulose-type resin, polyurethane-type resin, chlorinated rubber-type resin, polyvinyl chloride-acetatecopolymer-type resin, polyamide-type resin, polyester-type resin, epoxy-type resin and the like.

Further, the design layer 5 can be composed of not only the above-mentioned resins, but, for example, metal film layer of aluminum, chromium, copper, nickel, indium, tin, silicon oxide and the like by vacuum evaporation or plating. Further, the film thickness of the design layer 5 is preferably set at a range of 0.5 µm to 50 µm to obtain a sufficient design function. When the design layer is composed of a metal film layer, the film thickness is preferably 50Å to 1200Å.

The adhesive layer 6 joins the design layer 5 to surface of a molded product, and the material thereof includes acryl-type resin, nitrocellulose-type resin, polyurethane-type resin, chlorinated rubber-type resin, polyvinyl chloride-acetatecopolymer-type resin, polyamide-type resin, polyester-type resin, epoxy-type resin, polycarbonate-type resin, olefin-type resin, acrylonitrile-butadiene-styrene resin, and the like. The thickness of the adhesive layer 6 is preferably 0.5 to 50 µm.

The above-mentioned design layer 5 can be printed on the peeling layer 4 by a well-known gravure printing.

The gravure printing performs printing by holding an ink within a minute concave portion on a plate and transferring the ink to the peeling layer 4 under the pressure of an impression cylinder, and the ink used is basically of solvent-type, and thus has an advantage in that the ink exhibits an excellent adhesion even for a plastic film of poor wetting properties, such as the peeling layer 4.

Further, the surface of a plastic film does not absorb ink and exhibits a very smooth surface, so that when the gravure printing is utilized using an ink affinity with the peeling layer 4, an accurate design can be produced.

Further, a method for forming the design layer 5 on the peeling layer 4 includes not only the above-mentioned gravure printing, but any printing method such as offset printing, screen printing, coating, dipping if by such method, the design layer can adhere to the peeling layer 4.

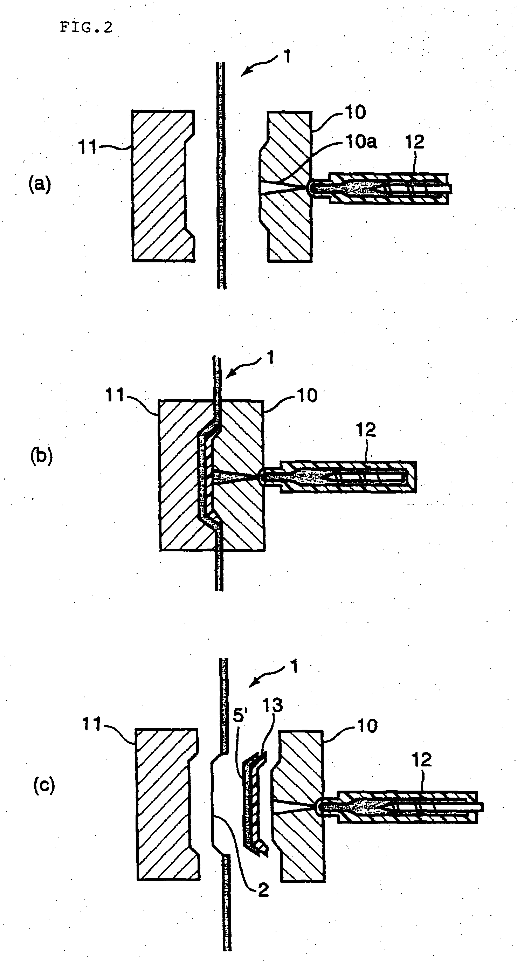

Figs. 2(a) to 2(c) show an inmold printing using the transfer film 1 having the above-mentioned configuration.

Further, in the following description, the surface subject to printing assumes a display panel of mobile phones, and a case where decoration is applied to the display panel will be explained.

Herein, the inmold printing consists mainly of a transfer film positioning process shown in Fig. 2(a), an injection molding process shown in Fig. 2(b), and a molded product taking-out process shown in Fig. 2(c).

An inmold printing device has a fixed mold 10 and a movable mold 11, so that the transfer film 1 is allowed to pass through therebetween. The transfer film 1 passing through both the molds allows the design layer 5 to be arranged towards to the fixed mold 10.

In the fixed mold 10, a sprue forming portion 10a for injecting a transparent resin is formed towards to the transfer film 1, and the sprue forming portion 10a is connected with a nozzle of an injection molding machine 12. When both the fixed mold 10 and the movable mold 11 are closed, a cavity as a space for molten resin injection is formed therebetween.

As the above-mentioned molten resin, there are shown general-purpose resins, such as polystyrene-type resin, polyolefin-type resin, ABS resin, AS resin and AN resin. Not only limited thereto, there can be used general-purpose engineering resins such as polyphenylene oxide-polystyrene resin, polycarbonate-type resin, polyacetal-type resin, acryl resin, polycarbonate denatured polyphenylene ether resin, and polybutylene terephtarate resin, as well as super engineering resins such as polysulfone resin, polyphenylene sulfide-type resin, polyphenylene oxide resin, polyalylate resin, polyether imide resin, polyimide resin, liquid crystal polyester resin, and polyaryl-type heat-resistant resin. Further, a composite resin to which a reinforcing material such as glass fiber and inorganic filer has been added is also included in the above-mentioned molten resin.

First, a conventional inmold printing (when additional printing is not performed) will be explained.

In Fig. 2(a), the transfer film 1 is fed between the fixed mold 10 and the movable mold 11 so that positioning is performed. That is, the positioning is performed such that a transparent resin injected into the cavity and molded, and a design formed in the transfer film 1 are arranged in place.

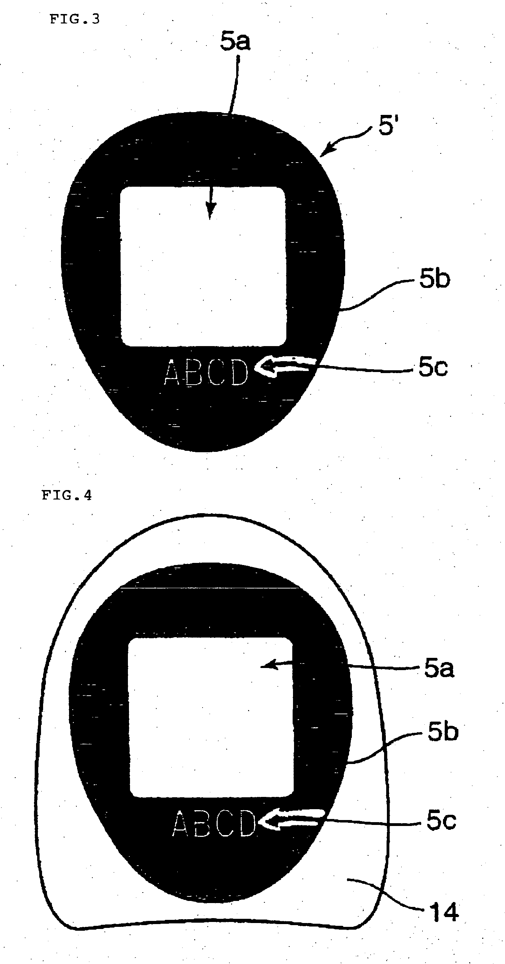

Fig. 3 shows a design 5' when the design layer 5 printed on the transfer film 1 is viewed from plane.

The transfer film 1 consists of a portion on which the design 5' has been printed and a portion on which the design 5' has not been printed, and a window portion 5a to which print is not applied is adapted to configure a transparent display window by forming a transparent resin on the back thereof.

Formed on the lower portion of a window frame-shaped pattern 5b to which black print has been applied is, for example, a manufacturer's logo 5c having white-blanked characters "ABCD."

Figs. 2(a) to 2(c) will be explained again.

In Fig. 2(b), when the transfer film 1 has been positioned, the fixed mold 10 and the movable mold 11 are clamped, and then, a transparent resin is injected into a cavity formed between the fixed mold 10 and the movable mold 11 opposite to each other.

Then, as shown in Fig. 2(c), after the transparent resin thus injected has been cured, the fixed mold 10 and the movable mold 11 are opened, and the base film 2 is peeled because the releasing layer 4 (see Fig. 1) is provided, thereby leaving a molded product 13 on the fixed mold 10 side. Transferred to the resin formed surface of the molded product 13 is the design 5', so that the design 5' is integrated with the molded product 13. Thereafter, the molded product 13 is released from the fixed mold 10.

Fig. 4 is a display panel of mobile phones which has been molded by the above-mentioned inmold printing and then decorated.

In the figure, the reference numeral 14 designates a molded panel made of a transparent resin, and formed on the surface of the molded panel 14 is a window frame-shaped black-color solid coating pattern 5b by transferring.

Formed on the lower portion of the solid coating pattern 5b is the manufacturer's logo 5c having white-blanked characters "ABCD," as described above.

Hereinafter, there will be explained a method for manufacturing a decorating product by additional printing which is a feature of the present invention.

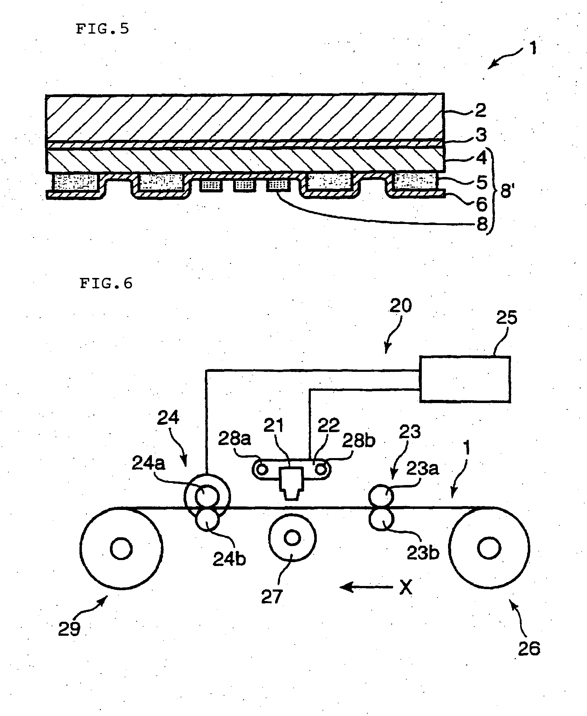

Fig. 5 shows a configuration of a transfer film on which a design has been additionally printed. Further, in the figure, the same components as in Fig. 1 are designated by the same reference numerals, so that the description thereof will be omitted.

In Fig. 5, additionally printed on the outer surface of the adhesive layer 6 in the transfer film 1 is a second design layer 8. In this embodiment, the second design layer 8 will be explained as a communication service company's logo "EFGH."

In order to additionally print the second design layer 8, a digital printing technology is preferably used.

According to the digital printing technology, digital data produced by DTP (Desktop Publishing) and the like can be directly printed without through a plate making, so that the technology is suitable for the additional printing of a design. Further, although the digital printing technology includes ink jet type, heat-sensitive ribbon type, laser marker type and the like, the ink jet type will be explained as a representative in this embodiment.

Fig. 6 shows a basic configuration of ink jet printer for printing the above-mentioned logo "EFGH."

Ink jet printer 20 mainly includes an ink jet head (hereinafter, abbreviated as the head) 21 for jetting an ink, an ink cartridge (not shown) for supplying an ink to the head 21, a carriage 22 for allowing the head 21 to scan, transport mechanisms 23, 24 for feeding the transfer film 1 in the longitudinal direction thereof, and a driver 25 for controlling the movement of the above-mentioned carriage 22 and the above-mentioned transport mechanisms 23, 24, respectively.

The above-mentioned transport mechanism 23 has a pair of feed rollers 23a, 23b arranged upstream from the head 21 (in the traveling direction), and a pair of feed rollers 24a, 24b arranged downstream from the head 21, the respective rollers being adapted to be interlocked via a belt. Further, the one feed roller 24a is a driving roller driven by a motor, and controlled by the driver 25.

The above-mentioned transport mechanisms 23, 24 causes the transfer film 1 to be released from a feed roll (onto which the transfer film 1 cut into a predetermined width is wound up) 26 and fed to the position of a platen 27.

Similarly to a serial scan-type ink jet printer, the carriage 22 is designed to cause the head 21 to perform scanning in a direction perpendicular to the traveling direction (X direction) of the transfer film 1 when viewed from plane (hereinafter, called in the film width direction), according to the control by the driver 25, and to slidably move two guide rails 28a, 28b arranged in parallel to each other in the film width direction.

Further, the carriage 22 is connected via a timing belt to the output shaft of a pulse control-type motor (not shown), and controlling the revolution speed and revolution direction of the motor allows the head 21 carried on the carriage 22 to be moved to any position in the film width direction. The ink jetted from the head 21 adheres as droplets to the adhesive layer 6 of the transfer film 1 arranged away from the head 21 by a gap of about 1 mm, whereby the logo "EFGH" can be printed as the second design layer 8.

An ordinary design jet allows an ink to adhere as droplets onto paper and penetrate into the paper so as to fix the design, but when an object subject printing is the transfer film 1, the ink jet allows an ink to adhere as droplets to the adhesive layer 6 coating the design layer 5. The adhesive layer 6 is composed of the above-mentioned raw material having no penetrability, so that the ink used for the ink jet of the present embodiment employs a thermosetting resin affinity with the adhesive layer 6. Further, when the raw material of an ink is a thermosetting resin even if the adhesive layer 6 has no acceptability, the ink is cured on the surface thereof and then can be fixated on the adhesive layer 6 even when the ink dose not penetrate into the adhesive layer 6.

Although there has been a fixed idea in that the design layer 5 is arranged between the peeling layer 4 and the adhesive layer 6 to be protected, in the present invention, the design layer 8 is formed by the ink jet printing in a state in which the layer is exposed outside the adhesive layer 6, whereby the decorating layer 8' is composed of the peeling layer 4, the design layer 5, the adhesive layer 6, and the second design layer 8 (see Fig. 5).

Further, the reference numeral 29 designates a roll having wound up the transfer film 1 printed with the second design by the ink jet.

Further, the printing by the ink jet printer 20 may be performed at the final step of the process of manufacturing the transfer film 1, or at a process different from the process of manufacturing the transfer film 1.

Further, the above-mentioned head 21 may be of a continuous type in which the head continues to discharge an ink at certain time intervals and deflects the ink droplets thus discharged to form an image, or of an on-demand type in which the head allows the ink to be discharged in correspondent to the image data to be printed.

Further, the ink discharge system includes thermal system, electrostatic actuator system, piezoelectric system and the like, but any thereof may be used.

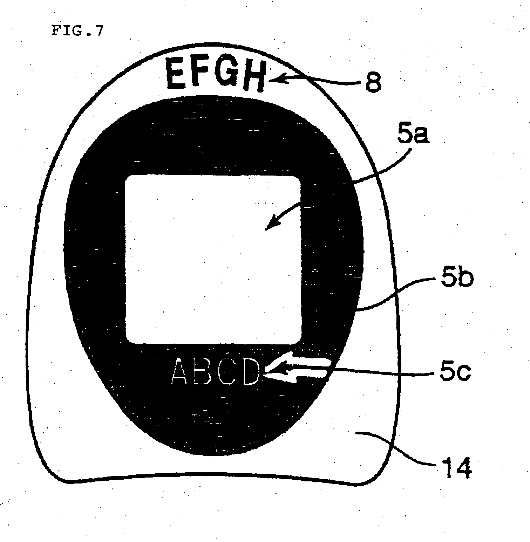

Fig. 7 shows a display panel (decorating product) of mobile phones as an example of the panel on which additional printing is performed by the above-mentioned ink jet printer 20.

In the figure, the reference numeral 14 designates a molded panel made of a transparent resin, and formed on the surface of the molded panel 14 is a window frame-shaped black-color solid coating pattern 5b by transferring. The solid coating pattern 5b and the logo 5c, "ABCD", of a manufacturer have been transferred by the conventional transfer film 1.

Added to the upper side of the solid coating pattern 5b is the logo "EFGH" of a communication service company as the second design layer 8.

In this manner, applying a print to the surface of the adhesive layer 6 of the transfer film 1 by the ink jet printing allows a design to be additionally printed as required.

Further, in the above-mentioned embodiment, characters have been explained as an example of additional printing, but not limiting thereto, a symbol, a geometric design, a solid coat pattern and the like can be additionally printed as the second design layer 8. The ink jet printer 20 is suitable for printing these designs, and can additionally print them accurately at a desired position.

Further, performing inmold printing by using either the transfer film 1 printed with only "ABCD" as the logo 5c of a manufacturer or the transfer film 1 in which "EFGH" as the logo of a communication service company is additionally printed onto the transfer film 1, the display panel shown in Fig. 4 or the display panel shown in Fig. 7 can be printed selectively.

In the present invention, the second design layer 8 may be placed at a position overlapping with the design layer 5 or at a position not overlapping therewith.

When designs are overlapped with each other, the design layer 5 and the adhesive layer 6 are requested to be transparent. This applies also to both-sides printing.

In the method for manufacturing a decorating product of the present invention, the above-mentioned embodiment uses a transfer film to perform decorating, but not limiting thereto, it can use a decorative film. The decorative film means a film in which a design layer is formed directly on a base film without through a peeling layer, and after decorating, the base film is integrated with a decorating product. Even when the decorative film is used, similarly to the transfer film, a second design can be additionally printed.

The thickness of the base film 2 for the decorative film capable of being used is 25 to 1000 µm, but preferably 50 to 600 µm considering a good handling ability, and preferably 100 to 500 µm considering a good molding stability.

Further, the transferring method of the present invention can apply not only to the inmold printing shown in the above-mentioned embodiment, but to a thermal transferring method in which a subject to be printed and a transfer film are laminated and the resultant layer is allowed to pass through between a heating-press roll and a back-up roll, thereby transferring a design to the subject to be printed.

Further, the method for manufacturing a decorating product of the present invention can apply not only to the resin molded product in the above-mentioned embodiment, but to a metal product, a glass product, a cloth product; a paper product and the like.

## Claims

1. A transfer film in which a design layer for transfer is formed through a peeling layer on a base material sheet and, further, is coated with an adhesive layer, **characterized in that** with respect to the transfer film, a second design layer is additionally printed on the surface of the adhesive layer by digital printing device.

2. A decorative film in which a design layer is formed on a base material sheet and, further, is coated with an adhesive layer, **characterized in that** with respect to the decorative film, a second design layer is additionally printed on the surface of the adhesive layer by digital printing device.

3. A method for manufacturing a decorating product, **characterized in that** with respect to a transfer film in which a design layer for transfer is formed through a peeling layer on a base material sheet and, further, is coated with an adhesive layer, a second design layer is additionally printed on the surface of the adhesive layer, and the transfer film, on which the second design layer is additionally printed, is brought into contact with a surface subject to printing under heat and pressure, whereby both the design and the second design thus additionally printed are transferred to the surface subject to printing.

4. A method for manufacturing a decorating product, **characterized in that** with respect to a decorative film in which a design layer is formed on a base material sheet and, further, is coated with an adhesive layer, a second design layer is additionally printed on the surface of the adhesive layer, and the decorative film, on which the second design layer is additionally printed, is brought into contact with a surface subject to printing under heat and pressure, whereby the decorative film having both the design and the second design thus additionally printed is integrated with the surface subject to printing.

5. A method for manufacturing a decorating product, **characterized in that** with respect to a transfer film in which a design layer for transfer is formed through a peeling layer on a base material sheet and, further, is coated with an adhesive layer, a second design layer is additionally printed on the surface of the adhesive layer as required, and one of the transfer film having only the design layer and the transfer film, on which the second design layer is additionally printed, is brought into contact with a surface subject to printing under heat and pressure, whereby a decorating product to which only the design is transferred, or a decorating product to which both the design and the second design are transferred is selectively manufactured.

6. A method for manufacturing a decorating product, **characterized in that** with respect to a decorative film in which a design layer is formed on a base material sheet and, further, is coated with an adhesive layer, a second design layer is additionally printed on the surface of the adhesive layer as required, and one of the decorative film having only the design layer and the decorative film, on which the second design layer is additionally printed, is brought into contact with a surface subject to printing under heat and pressure, whereby the decorating product with which the decorative film having only the design is integrated, or the decorating product with which the decorative film having both the design and the second design is integrated is selectively manufactured.

7. The method for manufacturing a decorating product according to any one of claims 3 to 6, wherein a transfer film or a decorative film, on which the second design layer is additionally printed, is arranged between a fixed mold and a movable mold, a clamp operation is performed, and then a molten resin is injected from the second design layer side into the cavity, whereby the second design layer is sealed between the resin molded in a mold and the adhesive layer.

8. The method for manufacturing a decorating product according to any one of claims 3 to 6, wherein the second design layer is additionally printed on the surface of the adhesive layer by using digital printing device.

9. The method for manufacturing a decorating product according to claim 8, wherein ink jet printer is used as the digital printing device.

10. A decorating product in which a design is printed on a surface subject to printing by using a transfer film or a decorative film whose design layer is coated with an adhesive layer, **characterized in that** a second design layer printed by using digital printing device is formed between the surface subject to printing of the decorating product and the adhesive layer adhering to the surface subject to printing.
